# EUROPÄISCHE PATENTSCHRIFT

(11) **EP 2 531 802 B1**
(45) Veröffentlichungstag und Bekanntmachung des Hinweises auf die Patenterteilung: **27.04.2016**
(21) Anmeldenummer: 11703132.8
(22) Anmeldetag: 28.01.2011
(51) Int. Cl.: F41A 21/32, F42C 17/04, F42C 11/00, G01P 3/66

(54) **VERFAHREN UND VORRICHTUNG ZUR ÜBERTRAGUNG VON ENERGIE AUF EIN PROJEKTIL**
METHOD AND DEVICE FOR TRANSMITTING ENERGY TO A PROJECTILE
PROCÉDÉ ET DISPOSITIF POUR TRANSMETTRE DE L'ÉNERGIE À UN PROJECTILE

(30) Priorität: 01.02.2010 DE 102010006529
(43) Veröffentlichungstag der Anmeldung: 12.12.2012
(73) Patentinhaber: Rheinmetall Air Defence AG, 8050 Zürich (CH)
(72) Erfinder: FRICK, Henry, Roger, CH-8442 Hettlingen (CH)
(74) Vertreter: Dietrich, Barbara
(86) Internationale Anmeldenummer: PCT/EP2011/000390
(87) Internationale Veröffentlichungsnummer: WO 2011/092024

(56) Entgegenhaltungen:
- DE-A1-102006 058 375
- US-A- 4 144 815
- US-A- 5 894 102
- US-B1- 7 506 586

## Beschreibung

Die Erfindung beschäftigt sich mit der Problematik der Energieübertragung an ein Projektil während des Rohrdurchlaufs und/oder Durchlauf durch die Mündungsbremse.

Eine solche Energieübertragung ist aus US 7,506,586 B1 bekannt. Für programmierbare Munition muss dem Projektil Energie für die darin integrierte Elektronik und für das Starten der Zündkette zur Verfügung gestellt werden. Dafür besitzen diverse Munitionen kleine Batterien, die die notwendige Energie liefern. Andere werden vor dem Abschuss programmiert und mit Energie versorgt. Wenn die Energiemenge dauerhaft, beispielsweise während der Lagerung oder dem Ladevorgang in der Waffe, zur Verfügung steht, kann es zu einer ungewollten Geschosszerlegung kommen bei Fehlfunktion der Elektronik. Daher ist der Einsatz einfacher Energiespeicher, wie die einer Batterie nicht immer geeignet.

Aus Sicherheitsgründen empfiehlt sich daher, die Energie dem Projektil erst in zeitlicher Nähe des Abschusses bereit zustellen, beispielsweise nach dem Zünden einer Treibladung und vor dem Verlassen des Mündungsausganges eines Waffenrohres. Dadurch wird gewährleitstet, dass vor dem Abschuss die Munition sich nicht selbst zur Detonation bringen kann, da sie über keine dafür erforderliche Energie verfügt.

Die Batterie aus der DE 31 50 172 A wird erst aktiviert, nachdem das Geschütz des Geschützrohr verlassen hat, was unter anderem durch einen mechanischen Zeitschalter erfolgt. Auch die Batterie in der DE 199 41 301 A wird erst durch große Beschleunigungen beim Abfeuern aktiviert.

Nach DE 488 866 A wird ein Kondensator des Zünders in Schusslage über externe Kontakte aufgeladen. Ein Zündkondensator wird nach der Lehre der DE 10 2007 007 404 A schon nach Ende der Vorrohrsicherheit, d.h., ca. zwei Sekunden vor Laufzeitende aufgeladen. Der Zündkondensator nach DE 26 53 241 A wird induktiv über Magnetspulen vor dem Abschuss aufgeladen.

### BESTÄTIGUNGSKOPIE

Mit der US 4,144,815 A wird eine Art Energieübertragungseinrichtung beschrieben, bei der das Geschützrohr als Mikrowellenleiter dient, sodass vor dem Feuern die Energie und die Daten übertragen werden. Eine Empfangsantenne am Zünder nimmt das eingestrahlte Signal auf und führt es über einen Umschalter entweder an eine Gleichrichtereinrichtung oder an ein als De-Modulator wirkenden Filter, der aus dem ankommenden Signal die Daten ausfiltert. Die Gleichrichtereinrichtung dient hierbei dazu, aus dem ankommenden Signal eine Versorgungsspannung zu erzeugen, die dann gespeichert wird.

In der DE 31 50 172 A wird die Versorgungsspannung induktiv vor bzw. beim Laden der Geschosses bereitgestellt.

Bekannt sind auch Vorrichtungen, die die Energie aus der Bewegungsenergie des Projektils gewinnen. Dabei ist ein Mechanismus im Projektil eingebaut, welcher aus der Beschleunigung nach der Zündung der Treibladung die nötige Energie in elektromagnetische Energie umwandelt und dabei einen im Projektil befindlichen Speicher auflädt.

So beschreibt die CH 586 384 A ein Verfahren, bei dem durch die lineare Schussbeschleunigung ein Weicheisenring und ein ringförmiger Dauermagnet gegenüber einer Induktionsspule in Richtung der Geschossachse verschoben werden, wodurch in der Spule eine Spannung erzeugt wird, welche einen Kondensator lädt. Zur Sicherheit wird dann mit der CH 586 889 A diese Einheit mit einer Transportsicherung versehen, die erst durch die bzw. eine hohe Beschleunigung beim Schuss zerstört wird.

Nachteilig hierbei kann sein, dass die Beschleunigung des Projektils im Geschützrohr benutzt wird, da diese nicht exakt genau kontrolliert werden kann. Das bewirkt unterschiedliche Energieaufladungen, sodass dem Projektil zu viel oder gar zu wenig Energie mit auf den Weg gegeben wird. Zu wenig Energie hat dann den Nachteil, dass die Funktionsfähigkeit nicht gewährleistet wird. Ein weiterer Nachteil ist der komplexe und damit Platz einnehmende Umwandlungsmechanismus für die Umwandlung von mechanischer Energie in elektromagnetischer Energie. Bei den hohen Umwelteinwirkungen (Stöße beim Abschuss, Querbeschleunigungen und Drall) auf das Geschoss während des Abschusses kann dieser Mechanismus zudem zerstört werden. Um dieses auszuschließen, sind konstruktive Maßnahmen notwendig, die die Munition nicht nur teuerer machen, sondern auch weiteren Platz im Projektil beanspruchen und dieses schwerer machen.

Generatoren im Geschosskopf schlagen die DE 25 18 266 A sowie die DE 103 41 713 A vor. Alternativen zu diesen sind die Nutzung von Piezokristallen, wie in der DE 77 02 073 A, DE 25 39 541 A oder DE 28 47 548 A vorgeschlagen und ausgeführt.

Die letztgenannten gehen dabei bereits den Weg, bekannte Energieumwandlungsmechanismen gegen ein Energieübertragungssystem zu ersetzen, welches seinerseits dem Projektil die notwendige Energie spätestens beim Mündungsdurchlauf aufprägt.

Die Erfindung stellt sich die Aufgabe, ein System zu schaffen, dass einfach aufgebaut eine optimale Energieübertragung ermöglicht.

Gelöst wird die Aufgabe durch die Merkmale des Patentanspruchs 1 bzw. 7. Vorteilhafte Ausführungen sind in den Unteransprüchen aufgezeigt.

Dabei geht die Erfindung von der Idee aus, die Energieübertragung induktiv und/oder kapazitiv vorzunehmen. Vorgeschlagen wird, einen Hohlleiter für die Energieübertragung zu nutzen, da das elektromagnetische Feld in einem Hohlleiter konzentriert ist. Das hierbei verwendete Energieübertragungssystem besteht dabei zumindest aus einem Hohlleiter, einem Sende-Koppler für die Energieübertragung, der von einem Signalerzeuger gespeist wird. Das Projektil hingegen verfügt zumindest über einen Sensor, welcher das Signal empfängt und einen Speicher im Projektil lädt. Der Hohlleiter für die Energieübertragung kann das Waffenrohr, die Mündungsbremse oder ein zusätzliches Teil zwischen dem Ende des Waffenrohrs und dem Anfang der Mündungsbremse sein oder auch am Ende der Mündungsbremse angebracht werden. Als bevorzugt hat sich die Einbindung im Bereich der Mündung zwischen einer Mündungsbremse und einem Geschützrohr gezeigt, wenn beispielsweise eine Programmierung des Geschosses bzw. Projektils vorgesehen ist.

Der Signalerzeuger (z. B. Oszillator) liefert ein Signal mit konstanter Mittenfrequenz, welche unterhalb der kleinsten Grenzfrequenz des Hohlleiters betrieben wird. Gegeben durch die Geometrie und Art des Sendekopplers (Spule, Dipol etc.) werden mehrere Hohlleiter - Moden (TEₘₙ mit m= 0, 1, 2 ... und n= 1, 2, 3...) angeregt. Der Signalerzeuger erzeugt entweder einen Träger im Dauerstrich-Betrieb (CW- Betrieb) oder ein moduliertes Signal.

Die Nutzung eines Hohlleiters unterhalb der Grenzfrequenz zur Messung der Mündungsgeschwindigkeit eines Projektils oder dergleichen ist bereits aus der DE 10 2006 058 375 A bekannt. Diese schlägt vor, das Waffenrohr bzw. das Abschussrohr und/oder Teile der Mündungsbremse als Hohlleiter zu nutzen (als Hohlleiter gilt ein Rohr mit einer charakteristischen Querschnittsform, das eine sehr gut elektrisch leitende Wand besitzt. Technisch weit verbreitet sind vor allem Rechteck- und Rund-Hohlleiter), welches jedoch unter der Grenzfrequenz des betreffenden Hohlleiter-Mode betrieben wird. Eine Nutzung als Energieübertragungssystem wird jedoch nicht angesprochen.

In Weiterführung der Erfindung ist vorgesehen, den Hohlleiter auch für die die V₀ Messung und nicht nur für die Energieübertragung zu nutzen. Die Mündungsgeschwindigkeit selbst kann vorzugsweise vor und/oder nach dem Projektil gemessen bzw. bestimmt werden. Bei der Messung vor dem Projektil wird die Tatsache berücksichtigt, dass die Spitze des Projektils beim Durchtritt des Hohlleiters das elektromagnetische Feld beeinflusst. Bei der Messung nach dem Projektil wird die im Wesentlichen flache oder plane Fläche des Bodens ausgenutzt, wodurch die Messung unabhängig von der Form der Spitze des Projektils erfolgt. Hierbei beeinflusst der Boden das elektromagnetische Feld. Diese jeweilige Änderung wird durch einen Empfangskoppler im Hohlleiter erfasst und einer Auswerteeinrichtung zugeführt. Ein derartiges Verfahren ist aus der WO 2009/141055 A1 bekannt. Der Abstand zwischen einem Sendekoppler, der seinerseits die Signale des Oszillators erhält, und dem Empfangskoppler ist variabel und kann je nach Modenselektion des Hohleiters individuell gewählt werden, ist aber abhängig vom Kaliber, der Innenabmessung des Hohlleiters sowie der Frequenz.

Die Energieübertragung kann des Weiteren mit einer Programmierung des Projektils kombiniert werden, die selbst Gegenstand einer Parallelanmeldung ist. Für programmierbare Munition müssen dem Projektil Informationen bezüglich seiner Detonationszeit und/oder Flugweg mitgeteilt werden. Das Signal mit der Frequenz für die Programmierung befindet sich auch hierbei unterhalb der Grenzfrequenz des betreffenden Hohlleiter-Modes. Damit die Programmierung von der Größe der Mündungsgeschwindigkeit V₀ unabhängig ist, sollten auch hierbei die Frequenz > 0Hz sein. Das bewirkt, dass die V₀ von langsamen als auch schnellen Projektilen keinen Einfluss auf die Programmierung hat. Der Träger der Frequenz wird mit der entsprechenden Information für das Projektil moduliert, das modulierte Signal dann zum Sende-Koppler im Hohlleiter geführt. Der Sende-Koppler regt nun das entsprechende elektromagnetische Feld im Hohlleiter an. Durchläuft das Projektil den Hohlleiter, empfängt das Projektil das Signal berührungslos mit kapazitiver und/oder induktiver Kopplung mittels eines im Projektil befindlichen Empfangskopplers. Es versteht sich, dass die Vorrichtung für die Energieübertragung vor der Vorrichtung zur Programmierung einzubinden ist und dass der Abstand beider so zu wählen ist, dass auch die Programmierung erfolgreich verlaufen kann.

Anhand eines Ausführungsbeispiels mit Zeichnung soll die Erfindung näher erläutert werden. Es zeigt in schematischen Darstellungen:
- Fig. 1: ein Energieübertragungssystem,
- Fig. 2: das Energieübertragungssystem in einer Kombination mit einer V₀ Messung,
- Fig. 3: ein Prozessdiagramm zur Abbildung des Ablaufs der Energieübertragung und / oder V₀ - Messung,
- Fig. 4: eine Erweiterung mit einer Projektilprogrammierung.

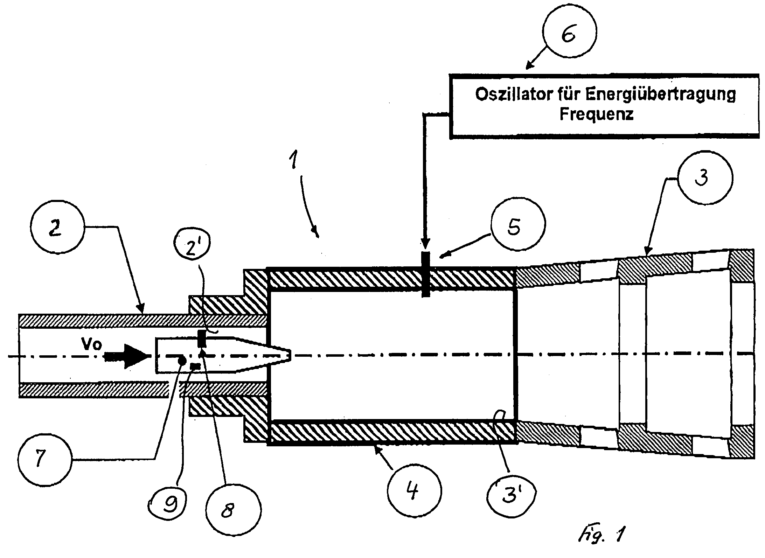

Fig. 1 zeigt ein Energieübertragungssystem 1, hier eingebunden zwischen einem Ende 2' eines Waffenrohres 2 und einer Mündungsbremse 3 (nicht Bedingung). Das Energieübertragungssystem 1 besteht aus wenigstens einem Hohlleiter 4 (und / oder Hohlleiterabschnitten) sowie zumindest aus einem Sende- Koppler 5, der von einem Oszillator 6 mit einer Frequenz f₂ gespeist wird. Mit 7 ist ein Projektil gekennzeichnet, dem beim Durchgang durch das Energieübertragungssystem 1 Energie übertragen werden soll. Der Hohlleiter 4 kann dabei der Ansatz 3' der Mündungsbremse 3 oder Bestandteil des Waffenrohrendes 2 sein. In diesem Beispiel ist der Hohlleiter 4 ein separates Teil, das zwischen dem Waffenrohr 2 und der Mündungsbremse 3 eingebunden ist.

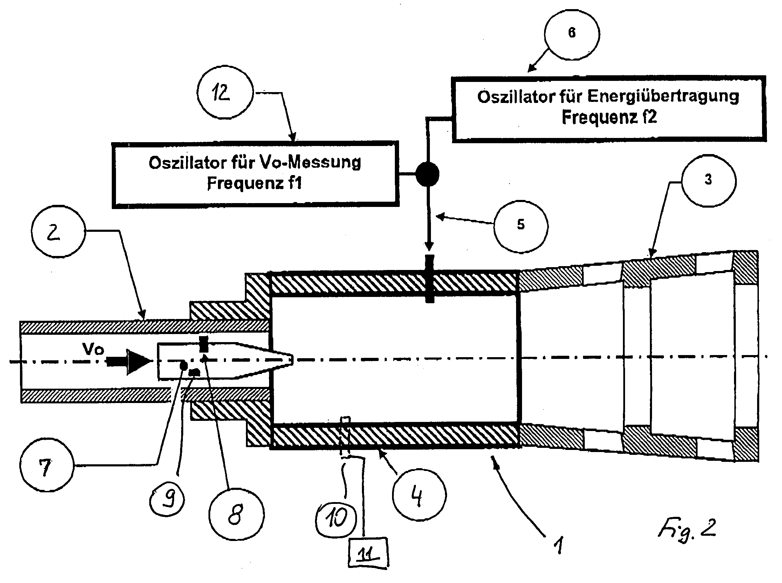

Fig. 2 zeigt das Energieübertragungssystem 1 aus Fig. 1 in Kombination mit einer V₀ Messung. In der bevorzugten Ausführung wird derselbe Sende-Koppler 5 für die V₀-Messung verwendet. Mit 10 ist ein für die V₀-Messung notwendige Empfangs-Koppler im Hohlleiter 4 angedeutet, der mit einer Auswerteeinrichtung 11 elektrisch verschaltet ist. Ein weiterer Oszillator 12 liefert ein weiteres Signal mit einer Frequenz f₁ für die V₀-Messung.

Die Funktionsweise bzw. das Verfahren wird nunmehr anhand einer der bevorzugten Ausführung nach Fig. 2 - also in einer möglichen Kombination von V₀-Messung und Energieübertragung - allgemein beschrieben:
Das Signal mit der Frequenz f₁ ist für die V₀-Messung und das Signal mit der Frequenz f₂ ist für die Energieübertragung vorgesehen. Beide Frequenzen f₁ und f₂ befinden sich unterhalb der Grenzfrequenz des betreffenden Hohlleiter-Modes und sind damit kleiner als die Grenzfrequenz. Zudem kann gelten, dass f₁ ≠ f₂ oder f₁ = f₂.

Die Frequenzen f₁ und f₂ werden für die V₀-Messung als auch Energieübertragung bevorzugt optimiert, wenn die für die Messung als auch Energieübertragung verwendeten (dieselbe f₁ = f₂) Frequenz bereits optimal ist. Damit sowohl die Messung als auch Energieübertragung von der Größe der V₀ unabhängig sind, sollten die Frequenzen > 0Hz sein. Das bewirkt, dass die V₀ von langsamen als auch schnellen Projektilen immer mit derselben Präzision gemessen werden, was auch bezüglich der Energieübertragung gilt.

Durchläuft das Projektil 7 den Hohlleiter 4 kann vor und/oder nach der Energieübertragung die Mündungsgeschwindigkeit V₀ in bekannter Art und Weise gemessen werden. Für die Energieübertragung besitzt das Projektil 7 einen Sensor 8, welcher das Signal mit der Frequenz f₂ empfängt und einen Speicher 9 im Projektil 7 lädt. Beim Durchfliegen erhält das Projektil 7 die nötige Energiemenge, sodass der Speicher 9 nach Verlassen des Hohlleiters 4 aufgeladen ist.

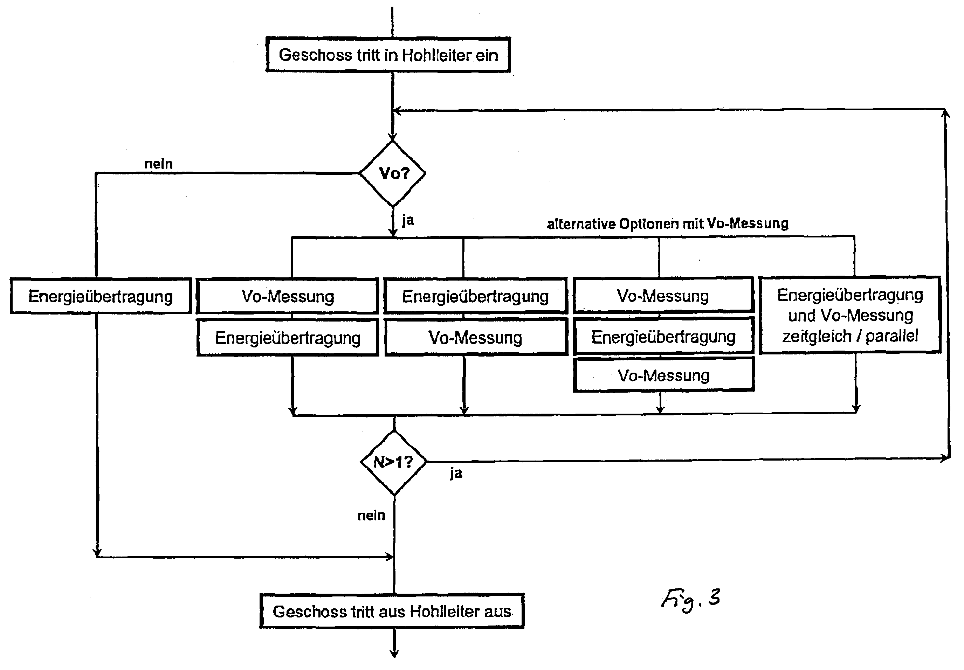

Fig. 3 zeigt in einer Übersicht den Ablauf des Energieübertrages auch in Kombination mit der V₀-Messung auf. Sofern keine V₀-Messung vorgesehen ist, wird nur der Pfad "Energieübertragung" gewählt. Ist hingegen sowohl die Messung als auch die Energieübertragung mit demselben Hohlleiter angedacht, stehen grundsätzlich vier verschiedene Verfahrensalternativen zur Verfügung: zuerst die V₀-Messung mit anschließendem Energieübertrag oder zuerst die Übertragung der Energie mit anschließender Messung oder die Energieübertragung eingeschlossen von jeweils einer V₀-Messung oder eine parallele V₀-Messung und Energieübertrag. Sofern die Anzahl der Bauteile/Hohlleiter es erlaubt, können die Schritte mit der Energieübertragung bzw. V₀-Messung mehrfach durchlaufen werden, bis das Geschoss bzw. Projektil 7 wieder aus dem Hohlleiter 4 austritt und danach beispielsweise die Mündungsbremse durchläuft.

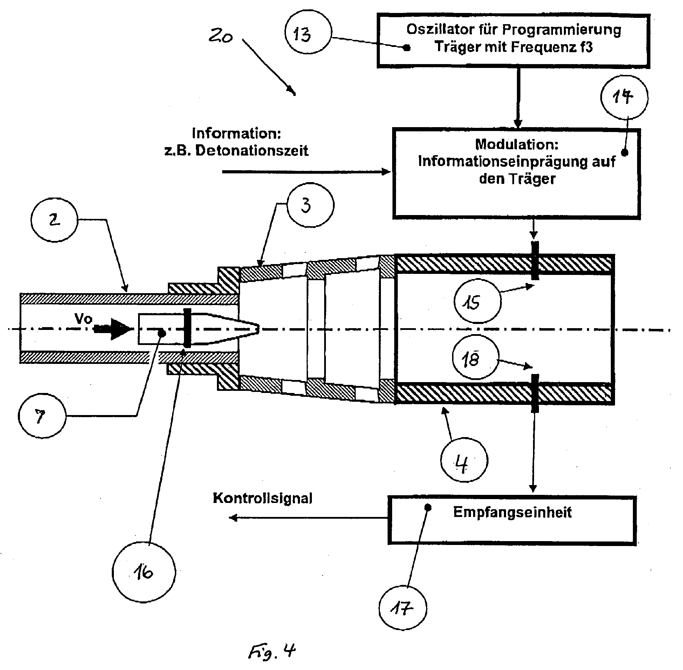

In Fig. 4 dargestellt ist die Ergänzung um eine Programmiereinrichtung 20. Dabei kann diese den ebenfalls den von der V₀- Messung und/oder Energieübertragung bereit vorhandenen Sende-Koppler 5 für die Programmierung nutzen. Vorzugsweise ein weiterer Signalerzeuger 13 schafft das Trägersignal f₃ für die Programmierung. Diesem werden dann die Informationen für das Geschoss bzw. das Projektil aufmoduliert 14 und über den Sende -Koppler 5 oder einem weiteren Sende- Koppler 15 einem im Projektil 7 enthaltenden Empfangskoppler 16 aufgeprägt bzw. übertragen. Eine weitere Empfangseinheit 17, die mit einem EmpfangsKoppler 18 im Hohlleiterbereich 4 elektrisch verbunden ist, kann zur Lieferung eines Kontrollsignals für die korrekte Programmierung dienen.

## Patentansprüche

1. Verfahren zur Energieübertragung auf ein Projektil (7) während des Durchlaufs durch ein Waffenrohr (2), Mündungsbremse (3) oder dergleichen mittels eines Energieübertragungssystems (1), wobei
- dem Projektil (7) eine von einem Signalerzeuger (6) für die Energieübertragung erzeugte Frequenz (f₂) beim Durchlauf aufgeprägt wird, wodurch dieses mit Energie aufgeladen wird, und wobei
- das Aufprägen innerhalb des Durchlaufs durch einen Hohlleiter (4) erfolgt, der unter der Grenzfrequenz des betreffenden Hohlleiter-Modes (TE, TM) betrieben wird.

2. Verfahren nach Anspruch 1, **dadurch gekennzeichnet, dass** im Hohlleiter (4) eine V₀-Messung des Projektils (7) mittels einer für die Messung erzeugten Frequenz (f₁) vorgenommen werden kann.

3. Verfahren nach Anspruch 2, **dadurch gekennzeichnet, dass** das entsprechende elektromagnetische Feld im Hohlleiter (4) anregt wird, sodass die Frequenz (f₁) am Projektil (7) reflektiert und ausgewertet werden kann.

4. Verfahren nach einem der Ansprüche 1 bis 3, **dadurch gekennzeichnet, dass** im Hohlleiter (4) eine Programmierung des Projektils (7) mittels einer für die Programmierung erzeugten und dieser Trägerfrequenz (f₃) aufmodulierten Information vorgenommen und diesem übertragen werden kann

5. Verfahren nach Anspruch 4, **dadurch gekennzeichnet, dass** der Träger der Frequenz für die Programmierung mit der entsprechenden Information für das Projektil (7) moduliert und das modulierte Signal berührungslos mittels kapazitiver und/oder induktiver Kopplung dem Projektil (7) übertragen wird.

6. Verfahren nach einem der Ansprüche 1 bis 5, **dadurch gekennzeichnet, dass** die Frequenzen > 0Hz sind.

7. Waffenrohr (2) und / oder Mündungsbremse (3) mit einer Vorrichtung zur Energieübertragung auf ein Projektil (7) während des Durchlaufs durch das Waffenrohr (2) und/oder die Mündungsbremse (3) mittels eines Energieübertragungssysterns (1), wobei das Energieübertragungssystem (1) besteht aus
- einem Hohlleiter (4), der unter der Grenzfrequenz des betreffenden HohlleiterModes (TE, TM) betrieben wird,
- einem Sende - Koppler (5), der eine von einem Signalerzeuger (6) für die Energieübertragung erzeugte Frequenz (f₂) beim Durchlauf des Projektils (7) diesem über einen Sensor (8) aufgeprägt, wodurch ein im Projektil (7) integrierter Speicher (9) mit Energie aufgeladen wird.

8. Waffenrohr (2) und / oder Mündungsbremse (3) nach Anspruch 7, **dadurch gekennzeichnet, dass** zur Messung einer V₀ Mündungsgeschwindigkeit des Projektils (7) im Hohlleiter (4) ein Sende- Koppler (5) und wenigstens ein Empfangs- Koppler (10) eingebunden sind, wobei beispielsweise ein weiterer Signalerzeuger (12) mit dem Sende-Koppler (5) verschaltet ist.

9. Waffenrohr (2) und / oder Mündungsbremse (3) nach Anspruch 8, **dadurch gekennzeichnet, dass** als Sende - Koppler (5) der von der Energieübertragung verwendete Sende-Koppler fungiert,

10. Waffenrohr (2) und / oder Mündungsbremse (3) nach einem der Ansprüche 7 bis 9, **dadurch gekennzeichnet, dass** zur Programmierung des Projektils (7) ein Signalerzeuger (13) eingebunden ist, der mit dem Sende-Koppler (5) oder einem weiteren Sende- Koppler (15) über eine Modulationseinheit (14) signaltechnisch verbunden ist, wobei das Projektil (7) einen weiteren Empfangs- Koppler (16) umfasst.

11. Waffenrohr (2) und Mündungsbremse (3) nach einem der Ansprüche 7 bis 10, **dadurch gekennzeichnet, dass** das das Energieübertragungssystem (1) zwischen einem Ende (2') des Waffenrohres (2) und der Mündungsbremse (3) eingebunden ist.

12. Waffenrohr (2) und Mündungsbremse (3) nach Anspruch 11 **dadurch gekennzeichnet, dass** der Hohlleiter (4) der Ansatz (3') der Mündungsbremse (3) oder Bestandteil des Waffenrohrendes (2) sein kann.

## Claims

1. Method for transmitting energy to a projectile (7) during the passage through a gun barrel (2), muzzle brake (3) or the like by means of an energy transmission system (1), wherein
- a frequency (f₂) generated by a signal generator (6) for the energy transmission is imparted to the projectile (7) during the passage, as a result of which the said projectile (7) is loaded with energy, and wherein
- the energy is imparted within the passage by a waveguide (4), which is operated below the cut-off frequency of the relevant waveguide mode (TE, TM).

2. Method according to Claim 1, **characterized in that** a V₀ measurement of the projectile (7) can be performed in the waveguide (4) by means of a frequency (f₁) generated for the measurement.

3. Method according to Claim 2, **characterized in that** the corresponding electromagnetic field is excited in the waveguide (4), so that the frequency (f₁) can be reflected at the projectile (7) and evaluated.

4. Method according to one of Claims 1 to 3, **characterized in that** programming of the projectile (7) can be performed by means of an item of information generated for the programming and modulated onto this carrier frequency (f₃) and can be transmitted to the said projectile (7) in the waveguide (4).

5. Method according to Claim 4, **characterized in that** the carrier of the frequency for the programming is modulated with the appropriate information for the projectile (7), and the modulated signal is transmitted to the projectile (7) without contact by means of capacitive and/or inductive coupling.

6. Method according to one of Claims 1 to 5, **characterized in that** the frequencies are > 0 Hz.

7. Gun barrel (2) and/or muzzle brake (3) having a device for transmitting energy to a projectile (7) during the passage through the gun barrel (2) and/or the muzzle brake (3) by means of an energy transmission system (1), wherein the energy transmission system (1) comprises
- a waveguide (4) which is operated below the cut-off frequency of the relevant waveguide mode (TE, TM),
- a transmitting coupler (5), which, via a sensor (8), imparts a frequency (f₂) generated by a signal generator (6) for the energy transmission to the projectile (7) during the passage of the latter, by which means a store (9) integrated intro the projectile (7) is loaded with energy.

8. Gun barrel (2) and/or muzzle brake (3) according to Claim 7, **characterized in that**, in order to measure a V₀ muzzle velocity of the projectile (7), a transmitting coupler (5) and at least one receiving coupler (10) are incorporated in the waveguide (4), wherein, for example, a further signal generator (12) is connected to the transmitting coupler (5).

9. Gun barrel (2) and/or muzzle brake (3) according to Claim 8, **characterized in that** the transmitting coupler used for the energy transmission functions as a transmitting coupler (5).

10. Gun barrel (2) and/or muzzle brake (3) according to one of Claims 7 to 9, **characterized in that**, in order to program the projectile (7), a signal generator (13) is incorporated, which has a signal connection to the transmitting coupler (5) or a further transmitting coupler (15) via a modulation unit (14), wherein the projectile (7) comprises a further receiving coupler (16).

11. Gun barrel (2) and muzzle brake (3) according to one of Claims 7 to 10, **characterized in that** the energy transmission system (1) is incorporated between an end (2') of the gun barrel (2) and the muzzle brake (3).

12. Gun barrel (2) and muzzle brake (3) according to Claim 11, **characterized in that** the waveguide (4) can be the attachment (3') of the muzzle brake (3) or a constituent part of the gun barrel end (2).

## Revendications

1. Procédé de transfert d'énergie à un projectile (7) pendant son passage dans un tube d'arme (2), un amortisseur de recul (3) ou similaire au moyen d'un système (1) de transfert d'énergie, dans lequel
lors du passage du projectile (7), une fréquence (f₂) formée par un générateur (6) de signaux de transfert d'énergie est appliquée sur le projectile, suite à quoi ce dernier est chargé en énergie et
l'application s'effectue à l'intérieur du passage par un conducteur creux (4) qui est conduit en dessous de la fréquence limite du mode concerné (TE, TM) du conducteur creux.

2. Procédé selon la revendication 1, **caractérisé en ce qu'**une mesure V₀ du projectile (7) peut être réalisée dans le conducteur creux (4) au moyen d'une fréquence (f₁) formée pour la mesure.

3. Procédé selon la revendication 2, **caractérisé en ce que** le champ électromagnétique correspondant est excité dans le conducteur creux (4) de telle sorte que la fréquence (f₁) puisse être réfléchie sur le projectile (7) et évaluée.

4. Procédé selon l'une des revendications 1 à 3, **caractérisé en ce qu'**une programmation du projectile (7) au moyen d'une information produite pour la programmation et modulée sur cette fréquence porteuse (f₃) est réalisée dans le conducteur creux (4) et peut être transmise au projectile.

5. Procédé selon la revendication 4, **caractérisé en ce que** l'information correspondante pour le projectile (7) est modulée sur la porteuse de fréquence de programmation et **en ce que** le signal modulé est transmis sans contact au projectile (7) par couplage capacitif/ou inductif.

6. Procédé selon l'une des revendications 1 à 5, **caractérisé en ce que** les fréquences sont > 0 Hz.

7. Tube d'arme (2) et/ou amortisseur de recul (3) doté d'un ensemble de transfert d'énergie à un projectile (7) pendant son passage dans le tube d'arme (2) et/ou l'amortisseur de recul (3), au moyen d'un système (1) de transfert d'énergie, le système (1) de transfert d'énergie étant constitué d'un conducteur creux (4) qui est conduit en dessous de la fréquence limite du mode concerné (TE, TM) du conducteur creux, d'un coupleur d'émission (5) qui, par l'intermédiaire d'un capteur (8), applique sur le projectile (7) pendant son passage une fréquence (f₂) formée par un générateur (6) de signaux de transfert d'énergie, de sorte qu'un accumulateur (9) intégré dans le projectile (7) est chargé en énergie.

8. Tube d'arme (2) et/ou amortisseur de recul (3) selon la revendication 7, **caractérisé en ce que** pour la mesure d'une vitesse V₀ du projectile (7) à l'embouchure, un coupleur d'émission (5) et au moins un coupleur de réception (10) sont intégrés dans le conducteur creux (4), un autre générateur (12) de signaux étant par exemple raccordé au coupleur d'émission (5).

9. Tube d'arme (2) et/ou amortisseur de recul (3) selon la revendication 8, **caractérisé en ce que** le coupleur d'émission utilisé par le transfert d'énergie fonctionne comme coupleur d'émission (5).

10. Tube d'arme (2) et/ou amortisseur de recul (3) selon l'une des revendications 7 à 9, **caractérisé en ce qu'**un générateur (13) de signaux raccordé en transmission de signaux au coupleur d'émission (5) ou à un autre coupleur d'émission (15) par l'intermédiaire d'une unité de modulation (14) est utilisé pour la programmation du projectile (7), le projectile (7) comprenant un autre coupleur de réception (16).

11. Tube d'arme (2) et/ou amortisseur de recul (3) selon l'une des revendications 7 à 10, **caractérisé en ce que** le système (1) de transfert d'énergie est incorporé entre l'extrémité (2') du tube d'arme (2) et l'amortisseur de recul (3).

12. Tube d'arme (2) et/ou amortisseur de recul (3) selon la revendication 11, **caractérisé en ce que** le conducteur creux (4) peut être l'appendice (3') de l'amortisseur de recul (3) ou un composant de l'extrémité (2) du tube d'arme.
